(19) Europäisches Patentamt
European Patent Office
Office européen des brevets

(11) **EP 2 848 342 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(51) Int Cl.:
***B23C 5/10*** *(2006.01)*

(21) Anmeldenummer: **13405110.1**

(22) Anmeldetag: **13.09.2013**

(54) **Vollfräswerkzeug zur rotierenden Materialbearbeitung**

Solid milling tool for machining rotating materials

Outil de fraisage complet pour l'usinage rotatif de matériaux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.03.2015 Patentblatt 2015/12**

(73) Patentinhaber: **Fraisa SA**
**4512 Bellach (CH)**

(72) Erfinder: **Senn, Stefan**
**3296 Arch (CH)**

(74) Vertreter: **Keller & Partner Patentanwälte AG**
**Eigerstrasse 2**
**Postfach**
**3000 Bern 14 (CH)**

(56) Entgegenhaltungen:
**EP-A1- 2 082 822        GB-A- 2 487 303**
**US-A1- 2008 199 265        US-B2- 8 286 536**

## Beschreibung

### Technisches Gebiet

Die Erfindung betrifft ein Vollfräswerkzeug gemäß dem Oberbegriff des Anspruchs 1. Ein Beispiel eines solchen Vollfräswerkzeugs ist in US2008/0199265 A1 dargestellt. Die Erfindung betrifft weiter ein Verfahren zur Herstellung eines Vollfräswerkzeugs gemäß dem Oberbegriff des Anspruchs 11.

### Stand der Technik

Fräswerkzeuge wie beispielsweise Schaftfräser weisen üblicherweise mehrere Zähne auf. Diese verlaufen um einen azimutalen Winkel zueinander versetzt jeweils wendelförmig um eine Längsachse des Fräsers. An jedem Zahn ist eine Schneide mit einer Spanfläche ausgebildet, welche das Spangut von der Schneide weg leitet. An jede Spanfläche schliesst sich unter einem Keilwinkel eine Freifläche an. Diese Freiflächen sind also bezüglich der Drehrichtung hinter den Schneiden angeordnet. Sie weisen gegenüber dem Rohlingkreisumfang, aus dem der Arbeitsbereich des Schaftfräsers herausgearbeitet ist, einen Freiwinkel auf. Das heisst, an den einzelnen Freiflächen sind die Werkzeugschneiden gegenüber dem Rohlingkreisumfang hinterschliffen, damit während des Fräsvorschubs ein Festsetzen des Fräsers in dem Werkstück vermieden wird. Um ein Festsetzen sicher zu verhindern, muss die Freifläche gegenüber der Rohlingumfangsfläche einen gewissen Mindest-Freiwinkel aufweisen.

Um einen Kostenaufwand bei der Erneuerung eines Fräswerkzeugs zu verringern, sind Fräswerkzeuge und andere zur spannenden Bearbeitung von Werkstücken vorgesehene Werkzeuge häufig mit ein oder mehreren auswechselbaren Schneidplatten bestückt, die eine gewisse begrenzte Standzeit haben und von Zeit zu Zeit vergleichsweise einfach und kostengünstig ausgewechselt werden können. Schneidplatten weisen aber eine vergleichsweise geringe Fertigungspräzision auf. Ein bevorzugtes Anwendungsgebiet von Schneidplatten liegt daher im Bereich des Drehens, bei welchem das Werkzeug feststeht und somit vergleichsweise einfach und genau zu positionieren ist, während das Werkstück rotiert wird. Ein Schnitt des Werkzeugs wird dabei nicht laufend unterbrochen (wie es beim Fräsen der Fall ist), sondern es wird weitgehend kontinuierlich ein Span vom Werkstück abgezogen. Damit werden gänzlich andere Anforderungen an eine Werkzeugschneide gestellt, als beim Präzisionsfräsen. Bei einer rotierenden Materialbearbeitung, bei welcher das Werkzeug rotiert wird und das Werkstück feststeht, kommen schneidplattenbesetzte Werkzeuge daher beispielsweise hauptsächlich beim Schruppen bzw. bei vergleichsweise grober räumender Bearbeitung zur Anwendung, bei welcher keine besondere Präzision erforderlich ist. Für eine Präzisions- bzw. Feinbearbeitung von Werkstücken sind Fräswerkzeuge mit Schneidplatten nicht geeignet. Zudem müssen schneidplattenbesetzte Fräswerkzeuge eine gewisse Mindestgrösse bzw. -durchmesser aufweisen, damit die Schneidplatten aufgenommen bzw. gehalten werden können. Mögliche Durchmesser liegen dabei typischerweise oberhalb von ca. 16 mm. Der Einsatzbereich derartiger Werkzeuge ist damit neben der vergleichsweise geringen Präzision auch durch die Grösse der Werkzeuge eingeschränkt.

Für eine Präzisions- bzw. Feinbearbeitung kommen Vollfräswerkzeuge zur Anwendung, d. h. Fräswerkzeuge, bei welchen die spanabhebenden Schneiden am Werkzeugkörper selbst ausgebildet sind. Vollfräswerkzeuge können auf allen Grössenskalen z. B. aus Schnellarbeitsstahl (HSS) sowie aus Hartmetall, Keramik oder Cermet sowie aus sämtlichen weiteren bekannten Materialien für Fräswerkzeuge gefertigt sein. Verschlissene Schneiden an Vollfräsern können durch Nachschleifen für den weiteren Gebrauch aufgearbeitet werden. Ist dies nicht mehr möglich, muss das gesamte Werkzeug entsorgt werden. Eine Verlängerung der Standzeit bzw. eine Verbesserung der Verschleisseigenschaften von Vollfräswerkzeugen ist daher besonders wünschenswert.

Vollfräswerkzeuge können unterschiedliche Geometrien aufweisen. Ein Werkzeug, welches sowohl für die Bearbeitung in axialer als auch in radialer Richtung und damit insbesondere auch zur Herstellung von Integralbauteilen geeignet ist, ist der Eckradius-Schaftfräser. Es handelt sich dabei um ein Werkzeug mit einem länglichen Werkzeugschaft, welcher einen Arbeitsbereich aufweist, in welchem Schneiden mit zugehörigen Spanflächen vorhanden sind, wobei jede der Schneiden einen mantelseitigen Hauptschneidenbereich, einen stirnseitigen Nebenschneidenbereich und einen den Hauptschneidenbereich mit dem Nebenschneidenbereich verbindenden Radiusbereich umfasst. Die Geometrie des Eckradius-Schaftfräsers wird so gewählt, dass beim Fräsen sanfte Übergänge im Werkstück erzeugt werden können.

Für eine präzise Bearbeitung und eine hohe Standzeit der Werkzeuge ist es unter anderem wichtig, dass bei deren Einsatz möglichst wenig störende Vibrationen auftreten. Ein Mittel, um derartige Vibrationen zu reduzieren, ist die gezielte Dimensionierung der oben erwähnten Freiflächen.

Die EP 2 082 822 A1 (SNECMA) betrifft einen Fräser zur Bearbeitung von Kompositmaterialien, z. B. fiberverstärkten Materialien für den Flugzeugbau. Der Fräser umfasst mindestens einen keramischen Abschnitt, seine Hauptschneiden und Nebenschneiden sind durch einen gerundeten Abschnitt mit einem Krümmungsradius von mehr als ca. 1,5 mm miteinander verbunden, wobei die Schneidwinkel der Haupt- und der Nebenschneide sich in vorgegebenen Bereichen bewegen. Die Schneiden können mehrere Freiflächen aufweisen. Die erste Freifläche hat im Bereich der stirnseitigen Schneide eine Breite von ca. 0,5-1 mm bei einem Werkzeugdurchmesser von 18 mm, der entsprechende Freiwinkel beträgt 2 - 8°, bevorzugt 4 - 6°, die erste und zweite Freifläche haben im Bereich der mantelseitigen Schneide eine Gesamtbreite von 1 - 4 mm, bevorzugt 2 - 3 mm, der Freiwinkel der ersten Freifläche liegt in demselben Bereich wie auf der Stirnseite.

So zeigt die WO 2006/046278 A1 (OSG) einen Eckradius-Schaftfräser aus Voll-Hartmetall mit einem Werkzeugdurchmesser D. Schneidkanten erstrecken sich vom Mantel über den Radiusbereich bis auf die Stirnseite. Zur Unterdrückung von Vibrationen ist entlang der mantelseitigen Hauptschneiden eine Freifläche mit einem Freiwinkel von 0-3° vorgesehen, deren Breite 0,005 - 0,03 D beträgt; der Helixwinkel aller Schneidkanten ist untereinander gleich und beträgt 35 bis ca. 40°. Die maximale Höhenrauigkeit auf den Oberflächen der spiralförmigen Rillen beträgt 2 $\mu$m oder weniger.

Die EP 2 093 003 A1 (Fraisa Holding AG) zeigt ebenfalls ein Vollfräswerkzeug, bei welchem mantelseitig Schneiden mit zugehörigen Spanflächen und bezüglich einer Drehrichtung hinter den Schneiden angeordnete Freiflächen ausgebildet sind. An wenigstens einer der Schneiden ist auf der zugehörigen Freifläche eine Freiflächenfase ausgebildet. Diese Freiflächenfase (oder Stützfase) generiert im Betrieb Kräfte, durch welche das Werkzeug besser am Werkstück abgestützt und dadurch stabilisiert wird. Ein Freiflächenabschnitt ist mit einer glättenden Oberflächenbehandlung versehen, so dass die Rauheit in diesem Abschnitt kleiner ist als die Rauheit der übrigen Freifläche.

Mit den vorgeschlagenen Massnahmen lassen sich die Vibrationen bis zu einem gewissen Grad eindämmen. Gerade beim Fräsen von Integralbauteilen aus beispielsweise Aluminium, bei welchem hohe Drehzahlen und Vorschübe gefahren werden, treten aber noch immer Vibrationen auf, welche den Bearbeitungsvorgang stören und zu einer Verkürzung der Werkzeuglebensdauer führen.

**Darstellung der Erfindung**

Aufgabe der Erfindung ist es, ein dem eingangs genannten technischen Gebiet zugehörendes Vollfräswerkzeug zu schaffen, welches sich durch geringe Vibrationen und eine hohe Standzeit auszeichnet und insbesondere zur Bearbeitung von Aluminium-Integralbauteilen geeignet ist.

Die Lösung der Aufgabe ist durch die Merkmale des Anspruchs 1 definiert. Gemäss der Erfindung setzt sich die Freiflächenfase des Eckradius-Schaftfräsers über die Freifläche des Radiusbereichs in die Freifläche des Nebenschneidenbereichs fort. In einem Freiflächenfasenbereich, der sich vom Hauptschneidenbereich über den Radiusbereich bis in den Nebenschneidenbereich erstreckt, weisen sowohl ein Freiwinkel der Freiflächenfase als auch eine Breite der Freiflächenfase jeweils gemessen in einer lokalen Bezugsebene, welche senkrecht steht auf einer lokalen Tangente der Schneide, einen stufenlosen Verlauf auf.

Für die Breite b der Freiflächenfase gilt erfindungsgemäss im gesamten Freiflächenfasenbereich die Beziehung

$$0.005\, d1 < b < 0.020\, d1,$$

wobei d1 den Werkzeugdurchmesser des Vollfräswerkzeugs bezeichnet und wobei eine maximale Breite b der Freiflächenfase unabhängig vom Werkzeugdurchmesser den Wert von 200 $\mu$m nicht übersteigt. Es hat sich gezeigt, dass bei kleineren Breiten zum einen ein zu geringer Abstützeffekt resultiert und zum anderen eine verlässliche Fertigung einer Fase mit stufenlosem Verlauf erschwert wird. Bei grösseren Breiten werden die vom Werkstück über die Freiffächenfase auf das Werkzeug ausgeübten Kräfte zu stark und sowohl das Werkzeug als auch das Werkstück können beschädigt werden. Wie ersichtlich ist die Breite b der Freiflächenfase grundsätzlich abhängig vom Durchmesser d1 des Werkzeugs, unabhängig von letzterem sollte aber eine Breite von 200 $\mu$m nicht überschritten werden, weil sich sonst das Verhalten des Werkzeugs im Betrieb unabhängig von dessen Durchmesser substanziell verschlechtert.

Im Hauptschneidenbereich und im Nebenschneidenbereich entspricht die Definition des Freiwinkels und der Breite der Freiflächenfase den üblichen Definitionen mit Bezugsebenen, die entlang der entsprechenden Schneidkanten jeweils eine fest vorgegebene Orientierung haben. Im Radiusbereich hingegen ändert sich die Orientierung der oben definierten Bezugsebene zusammen mit dem Verlauf der Schneidkante, so dass eine Definition für den Winkel und die Breite der Freiflächenfase erhalten wird, welche entlang der gesamten Schneide gültig ist, insbesondere auch an den Übergängen zwischen Mantel und Radius bzw. zwischen Radius und Stirnfläche. Im Rahmen der Definition wird bei verrundeten Schneidkanten der Schnittpunkt der Tangenten an die Stützfase und die Spanfläche als "Schneide" aufgefasst, zu welcher zur Angabe der lokalen Bezugsebene die lokale Tangente zu bilden ist.

Unter einem "stufenlosen Verlauf" wird verstanden, dass sich sowohl der Freiwinkel als auch die Breite der Freiflächenfase gemäss obiger Definition in Funktion der Schneidenposition stetig und differenzierbar verhalten, dass also keine Sprünge oder Kanten auftreten.

Mit Vorteil erstreckt sich der Freiflächenfasenbereich über den gesamten Hauptschneidenbereich, den gesamten Radiusbereich und den gesamten Nebenschneidenbereich, also entlang der gesamten mit dem Werkstück im Rahmen der Bearbeitung in Kontakt kommenden Schneide. Es ist aber im Rahmen der Erfindung auch möglich, dass nur ein Bereich der Freifläche die Fase aufweist, vorausgesetzt, dieser Bereich erstreckt sich vom axial vorderen Bereich der Hauptschneide über den gesamten Radiusbereich bis in den radial äusseren Bereich der Nebenschneide.

Ebenfalls mit Vorteil ist die erfindungsgemässe Freiflächenfase an sämtlichen Schneiden ausgebildet, z. B. an sämtlichen Schneiden eines 2- oder 3-schneidigen Fräswerkzeugs. Es ist jedoch im Rahmen der Erfindung auch möglich, die Freiflächenfase nur an einer oder einem Teil der vorhandenen Schneiden auszubilden und/oder die Ausdehnung des Freiflächenfasenbereichs bei den verschiedenen Schneiden unterschiedlich zu wählen.

Im Folgenden ist ohne Einschränkung der Allgemeinheit die Erfindung anhand von Werkzeugen beschrieben, bei welchen sämtliche Schneiden mit der erfindungsgemässen Freiflächenfase versehen sind. Die im Rahmen der Erfindung beschriebenen Merkmale und Abwandlungen lassen sich aber jeweils auch auf Werkzeuge übertragen, bei welchen nur einige der Schneiden die erfindungsgemässe Gestaltung aufweisen. Ferner kann die spezifische Ausgestaltung der Freiflächenfase bei den verschiedenen Schneiden eines Werkzeugs unterschiedlich sein.

Versuche haben gezeigt, dass die erfindungsgemässe Freiflächenfase, welche sich vom Mantel über den Radius bis in die Stirn erstreckt und einen stufenlosen Verlauf aufweist, das Vibrationsverhalten des Werkzeugs unabhängig von dessen Zustellrichtung verbessert. Die Freiflächenfase stützt das Werkzeug radial und axial während des Fräsens ab, beruhigt Schnittkraftschwankungen und reduziert dadurch Schwingungen. Dadurch ergibt sich ein gleichmässigeres Arbeitsergebnis und die Standzeit des Werkzeugs wird erhöht. Dies gilt auch für Werkzeuge mit hohen Auskragungen von z. B. dem dreifachen Werkzeugdurchmesser oder mehr. Das erfindungsgemässe Vollfräswerkzeug ist insbesondere zur Herstellung von Integralbauteilen geeignet, besonders solchen aus Aluminium, insbesondere Aluminium-Knetlegierungen oder Aluminiumguss. Es lässt sich aber auch zur Bearbeitung anderer Werkstoffe wie z. B. Kupferlegierungen, Stahl, Inox, Titan oder auch Kunststoffen, insbesondere Thermoplaste, einsetzen.

Das Werkzeug ist mit Vorteil aus Voll-Hartmetall hergestellt. Es kann eine Beschichtung aufweisen.

Mit Vorteil wird das erfindungsgemässe Vollfräswerkzeug durch ein Verfahren hergestellt, bei welchem in einem Arbeitsbereich Schneiden mit zugehörigen Spanflächen und bezüglich einer Drehrichtung hinter den Schneiden angeordnete Freiflächen erzeugt werden, wobei jede der Schneiden einen mantelseitigen Hauptschneidenbereich, einen stirnseitigen Nebenschneidenbereich und einen den Hauptschneidenbereich mit dem Nebenschneidenbereich verbindenden Radiusbereich umfasst. An wenigstens einer Schneide wird im Hauptschneidenbereich auf der zugehörigen Freifläche eine Freiflächenfase ausgebildet. Die Freiflächenfase wird zudem derart erzeugt, dass sie sich über die Freifläche des Radiusbereichs in die Freifläche des Nebenschneidenbereichs fortsetzt, wobei in einem Freiflächenfasenbereich, der sich vom Hauptschneidenbereich über den Radiusbereich bis in den Nebenschneidenbereich erstreckt, sowohl ein Freiwinkel der Freiflächenfase als auch eine Breite der Freiflächenfase jeweils gemessen in einer lokalen Bezugsebene, welche senkrecht steht auf einer lokalen Tangente der Schneide, einen stufenlosen Verlauf aufweisen.

Besonders bevorzugt wird nun die Freiflächenfase durch konventionelles Schleifen erzeugt, d. h. mit einem herkömmlichen Schleifwerkzeug mit einer runden Schleifscheibe. Dies zum einen im Gegensatz zu einer Rundschlifffase, bei welcher der ursprüngliche Querschnitt stehengelassen bleibt, dies ist bei der Geometrie des Werkzeugs nicht im gesamten Freiflächenfasenbereich möglich, sowie zum anderen im Gegensatz zum radialen Schleifen.

Mit Vorteil wird die Freiflächenfase in einem letzten Schritt der Werkzeugprofilierung hergestellt, also nachdem die übrigen Aspekte der Schneidengeometrie erzeugt worden sind. Ausgehend von einem Hartmetall-Rohling wird dieser also zunächst rundgeschliffen, um die einzelnen Abschnitte auf ihren Normaldurchmesser zu bringen. Anschliessend erfolgt das Schärfen: Durch entsprechende Schleifvorgänge werden die Schneidgeometrie, die Spannuten etc. eingebracht. Erst dann erfolgt das konventionelle Schleifen der Freiflächenfase.

Durch konventionelles Schleifen lässt sich eine Freiflächenfase mit den erfindungsgemässen Eigenschaften zuverlässig und wirtschaftlich erzeugen.

Vorzugsweise weicht die Breite b im Freiflächenfasenbereich bei einem Werkzeugdurchmesser d1 um nicht mehr als die Variation $\Delta b$ von einem vorgegebenen Wert ab, wobei

$$\Delta b = 40\ \mu m,\ falls\ d1 \leq 6\ mm,$$

$$\Delta b = 60\ \mu m,\ falls\ 6\ mm < d1 < 12\ mm,$$

und

$$\Delta b = 80\ \mu m,\ falls\ d1 \geq 12\ mm.$$

Die Breite kann somit im Freiflächenfasenbereich zwar durchaus variieren, die Variation sollte aber die angegebenen Werte nicht überschreiten, zudem sollte die Variation so erfolgen, dass der stufenlose Verlauf im Sinn der Erfindung gewährleistet ist.

Bevorzugt weicht die Breite b der Freiflächenfase in einem Hauptschneidensektor und einem Nebenschneidensektor des Freiflächenfasenbereichs bei einem Werkzeugdurchmesser d1 um nicht mehr als die Variation Δb' von einem vorgegebenen Wert ab, wobei

$$\Delta b' = 15 \ \mu m, \text{ falls } d1 \leq 6 \text{ mm},$$

$$\Delta b' = 30 \ \mu m, \text{ falls } 6 \text{ mm} < d1 < 12 \text{ mm},$$

und

$$\Delta b' = 40 \ \mu m, \text{ falls } d1 \geq 12 \text{ mm}.$$

Die Breite kann somit im Freiflächenfasenbereich zwar durchaus variieren, die Variation sollte aber die angegebenen Werte nicht überschreiten, zudem sollte die Variation so erfolgen, dass der stufenlose Verlauf im Sinn der Erfindung gewährleistet ist.

Bevorzugt weicht die Breite b der Freiflächenfase in einem Hauptschneidensektor und einem Nebenschneidensektor des Freiflächenfasenbereichs bei einem Werkzeugdurchmesser d1 um nicht mehr als die Variation Δb' von einem vorgegebenen Wert ab, wobei

$$\Delta b' = 15 \ \mu m, \text{ falls } d1 \leq 6 \text{ mm},$$

$$\Delta b' = 30 \ \mu m, \text{ falls } 6 \text{ mm} < d1 < 12 \text{ mm},$$

und

$$\Delta b' = 40 \ \mu m, \text{ falls } d1 \geq 12 \text{ mm}.$$

Ferner weicht bevorzugt eine Gesamtfläche der Freiflächenfase bei einem Radius r des Radiusbereichs um nicht mehr als einen Wert ΔA von einer Gesamtfläche einer Freiflächenfase mit einer konstanten Breite des vorgegebenen Werts ab, wobei

$$\Delta A = 0.003 \ d1 \cdot r,$$

bevorzugt

$$\Delta A = 0.0025 \ d1 \cdot r.$$

Dabei entspricht diese vorgegebene Gesamtfläche dem Produkt aus der Länge und der vorgegebenen Breite der Freiflächenfase.

Der Freiflächenfasenbereich ist definitionsgemäss aus dem Hauptschneidensektor, einem ersten Übergangssektor, dem Radiussektor, einem zweiten Übergangssektor und dem Nebenschneidensektor zusammengesetzt, welche jeweils unmittelbar aufeinander folgen. Der erste Übergangssektor erstreckt sich dabei über einen Bereich der Schneide, welcher vor und nach einem ersten Punkt der Schneide, in welchem diese ausgehend vom Hauptschneidenbereich einen Mantel radial nach innen verlässt, eine Länge aufweist, die einer Winkeländerung von 20° der lokalen Tangente im Radiusbereich, angrenzend an den ersten Punkt entspricht. Der zweite Übergangssektor erstreckt sich dabei über einen Bereich der Schneide, welcher vor und nach einem zweiten Punkt der Schneide, in welchem deren lokale Tangente ausgehend vom Hauptschneidenbereich erstmals einen rechten Winkel zu einer Werkzeugachse bildet, eine Länge aufweist, die einer Winkeländerung von 20° der lokalen Tangente im Radiusbereich, angrenzend an den zweiten Punkt entspricht.

Die gesamte abstützende Wirkung der Freiflächenfase hängt wesentlich von der Gesamtfläche der Freiflächenfase ab. Zusammen mit dem stufenlosen Verlauf der Fase und den erwähnten Toleranzen Im Haupt- und Nebenschneidensektor stellt das Einhalten der erwähnten Flächentoleranz sicher, dass die Abstützwirkung bei sämtlichen im Betrieb auftretenden Arbeitsrichtungen innerhalb eines vorteilhaften Bereichs liegt.

Mit Vorteil liegt der Freiwinkel der Freiflächenfase im gesamten Freiflächenfasenbereich im Bereich von 0.0 bis 3.0°. Bei grösseren Winkeln fehlt es am gewünschten Abstützeffekt. Besonders bevorzugt liegt der Freiwinkel der Freiflächenfase im gesamten Freiflächenfasenbereich im Bereich von 0.0 bis 1.5°. Bei diesen geringen Winkeln ergibt sich zuverlässig eine ausreichende Abstützung des Werkzeugs am Werkstück.

In einer bevorzugten Ausführungsform wird ein Freiwinkel Null angestrebt, die höheren Werte sind primär durch Fertigungstoleranzen bedingt. In anderen Ausführungsformen kann der Freiwinkel der Freiflächenfase im gesamten Bereich oder in Teilbereichen bewusst grösser als Null gewählt werden, der Winkel könnte beispielsweise entlang der Nebenschneide 0° betragen, entlang der Hauptschneide 1°, mit einem kontinuierlichen Übergang im Radiusbereich. Die entsprechend geringere Abstützung kann bei Bedarf durch eine grössere Breite der Freiflächenfase, im Rahmen der erfindungsgemässen Grenzen, kompensiert werden.

Bevorzugt ist ein Freiwinkel eines an die Freiflächenfase angrenzenden Bereichs der Freifläche im gesamten Freiflächenfasenbereich grösser als der Freiwinkel der Freiflächenfase. Insbesondere liegt der Freiwinkel des angrenzenden Bereichs im Bereich von 6 bis 20°. Der angrenzende Bereich bewirkt somit keine eigentliche Abstützung des Werkzeugs am Werkstück. Dies ist der Freiflächenfase vorbehalten.

Mit Vorteil variiert der Freiwinkel des angrenzenden Bereichs im gesamten Freiflächenfasenbereich um nicht mehr als 4°. Es hat sich gezeigt, dass sich durch eine möglichst gleichbleibende Geometrie der Freifläche entlang der Schneidkante das gewünschte Arbeitsverhalten des Werkzeugs mit geringen Vibrationen, gutem Arbeitsergebnis und hoher Standzeit erreichen lässt.

Andere Geometrien sind möglich, insbesondere solche, bei welchen der Freiwinkel des angrenzenden Bereichs im Mantel einen anderen Wert aufweist als in der Stirn, wobei im Radiusbereich bevorzugt ein allmählicher Übergang vom einen zum anderen Wert stattfindet.

Bevorzugt geht die Freiflächenfase im gesamten Freiflächenfasenbereich in genau einer zur wenigstens einen Schneide weitgehend parallelen Kante in einen angrenzenden Bereich der zugehörigen Freifläche über. Auch in dieser Hinsicht ist die möglichst gleichbleibende Geometrie für das Arbeitsverhalten des Werkzeugs von Vorteil.

Vorzugsweise beträgt ein Kerndurchmesser bei einem Werkzeugdurchmesser d1 mindestens 0.55.d1. Dadurch wird - insbesondere bei hohen Auskragungen von 3.d1 oder mehr, wie sie oft zur Herstellung von Integralbauteilen benötigt werden, - im Zusammenhang mit der erfindungsgemässen Geometrie der Freiflächenfase ein stabiles Werkzeug mit entsprechend geringer Vibrationsneigung geschaffen.

Geringere Kerndurchmesser sind im Rahmen der Erfindung ebenfalls möglich, insbesondere bei geringeren Auskragungen.

Eine bevorzugte Ausführungsform des erfindungsgemässen Vollfräswerkzeugs weist eine Abstützfläche auf, welche im Radiusbereich spannutenseitig an die Schneidkante angrenzt und von einer radial nach innen angrenzenden Zahnanschnittfläche abgewinkelt ist. Die Zahnanschnittfläche bezeichnet dabei diejenige in die Stirnfläche des Werkzeugs mündende Fläche, welche sich durch den Zahnanschnitt bei der Herstellung der stirnseitigen Nebenschneide ergibt. Die Abstützfläche stützt die Schneidkante und die Freiflächenfase im Radiusbereich und kann vom Werkstück auf das Werkzeug ausgeübte Kräfte aufnehmen, insbesondere diejenigen Kräfte, welche aufgrund des durch den gesamten Radiusbereich der Schneidkante verlaufenden Freiflächenfasenbereichs entstehen.

Je nach Dimensionierung des Schneidwerkzeugs und der spezifischen Schneidengeometrie im Stirn- und Radiusbereich kann sich eine Abstützfläche erübrigen.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1a    Eine Ausführungsform eines erfindungsgemässen Schaftfräsers in einer Seitenansicht;

Fig. 1b    eine Detailansicht einer Schneidkante und der dahinterliegenden Freifläche;

Fig. 2a-d    Querschnitte durch den Schaftfräser entlang von drei Schnittebenen sowie eine Seitenansicht des Zentrumsbereichs der Werkzeugspitze; und

Fig. 3        eine Detailansicht des stirnseitigen Abschnitts des Schaftfräsers.

Grundsätzlich sind in den Figuren gleiche Teile mit gleichen Bezugszeichen versehen.

**Wege zur Ausführung der Erfindung**

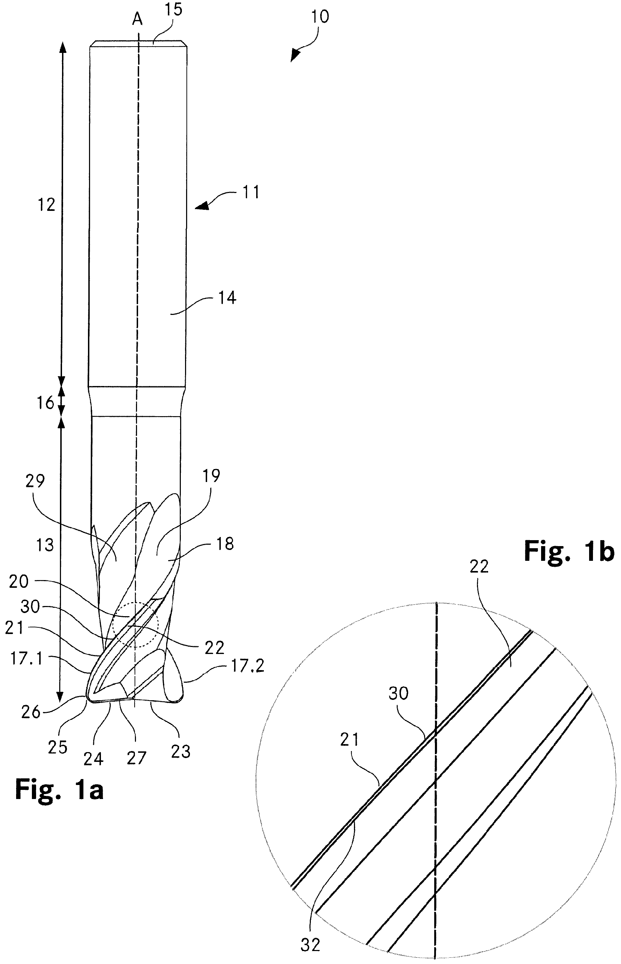

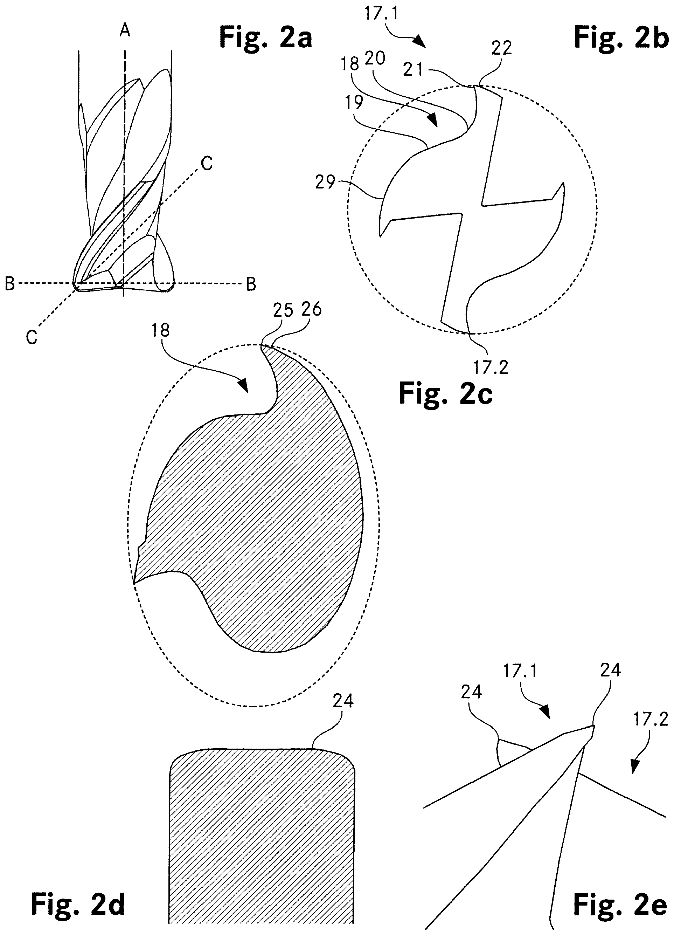

Die Figur 1a zeigt eine Ausführungsform eines erfindungsgemässen Schaftfräsers in einer Seitenansicht, die Figur 1b zeigt eine Detailansicht einer Schneidkante und der dahinterliegenden Freifläche, dargestellt ist der im gestrichelten Kreis in der Figur 1a liegende Bereich. Die Figuren 2b-2d zeigen Querschnitte durch den Schaftfräser entlang von drei in der Figur 2a angedeuteten Schnittebenen: Die Figur 2d zeigt einen Querschnitt durch die Schnittebene B-B senkrecht zur Längsachse A des Werkzeugs, die Figur 2c zeigt einen Querschnitt durch die Schnittebene C-C, welche 45° zur Längsachse A geneigt ist, die Figur 2d zeigt einen Querschnitt durch eine Schnittebene, welche durch die Längsachse A und die beiden Nebenschneiden verläuft. Die Figur 2e zeigt eine Seitenansicht des Zentrumsbereichs der Werkzeugspitze in einer durch die Längsachse A verlaufenden Ebene, welche senkrecht steht zur Schnittebene der Figur 2d.

Der Schaftfräser 10 ist einstückig aus Hartmetall gefertigt. Er weist einen im Wesentlichen kreiszylindrischen Grundkörper 11 mit einer Längsachse A auf. Der Durchmesser des beispielhaft in den Figuren 1a, 1b gezeigten Grundkörpers beträgt 10 mm. Der Grundkörper 11 ist dabei in seiner Längsrichtung in einen Haltebereich 12, einen Übergangsbereich 16 und einen Arbeitsbereich 13 gegliedert. Der Haltebereich 12 ist als kreiszylindrischer Schaft 14 ausgebildet, welcher beispielsweise in einem entsprechenden Futter einer Fräsmaschine aufgenommen und gehalten werden kann. Zum vereinfachten Einbringen in ein Bohrfutter weist der Schaft 14 am haltebereichsseitigen (proximalen) Längsende des Grundkörpers 14 eine Abfasung 15 auf.

Distal an den Haltebereich 12 schliesst sich der Übergangsbereich 16 an, in welchem sich der kreisförmige Querschnitt des Schaftfräsers 10 in distaler Richtung leicht reduziert. An den Übergangsbereich 16 schliesst sich wiederum distal der Arbeitsbereich 13 an. Seine Länge beträgt 32.5 mm. Im Arbeitsbereich 13 sind zwei wendelförmig verlaufende Schneidzähne 17.1, 17.2 ausgebildet. Die Schneidenlänge beträgt beim dargestellten Werkzeug axial gemessen 11 mm, der Drallwinkel bei der einen Schneide 40.5°, bei der anderen 42°. Im Folgenden wird exemplarisch der Schneidezahn 17.1 beschrieben, wobei sich von diesem der zweite Schneidzahn 17.2 nur durch seine azimutal um 90 Grad versetzte Anordnung am Werkzeug 10 und den erwähnten unterschiedlichen Drallwinkel unterscheidet. In Drehrichtung des Werkzeugs 10 ist vor dem Schneidezahn 17.1 eine Spannut 18 ausgestaltet. Eine Innenwandung 19 der Spannut 18 umfasst dabei eine Spanfläche 20 des Schneidezahns 17.1 sowie eine Rückseite 29 des anderen Schneidezahns 17.2.

Eine radial am weitesten von der Längsachse A entfernte wendelförmige Kante am Schneidezahn 17.1 bildet eine Hauptschneide 21 des Werkzeugs 10. Bezüglich der Drehrichtung hinter der Hauptschneide 21 ist eine Freifläche 22 ausgebildet, welche sich in der Mantelregion des Arbeitsbereichs 13 ausgehend von der Hauptschneide 21 über ca. 15 Grad in azimutaler Richtung erstreckt. Ein radialer Abstand der Oberfläche der Freifläche 22 von der Längsachse A nimmt dabei mit zunehmendem azimutalen Abstand von der Hauptschneide 21 stetig ab. An einem arbeitsbereichseitigen (distalen) Längsende 23 des Werkzeugs 10 ist stirnseitig, zur Hauptschneide 21 gehörig, eine Nebenschneide 24 ausgebildet, wobei die Spanfläche 20 auch als eine Spanfläche der Nebenschneide 24 wirkt. Die Nebenschneide weist gegenüber einer senkrecht auf der Längsachse A stehenden Fläche einen Hohlschliff von 19° auf. Die Hauptschneide 21 und die Nebenschneide 24 sind über eine Radiusschneide 25 miteinander verbunden, wobei die Schneiden derart ausgebildet sind, dass eine vom Mantelbereich über den Radius bis in die Stirnseite durchgängige, stufenlose Schneide gebildet wird. Der Krümmungsradius im Bereich der Radiusschneide beträgt im dargestellten Beispiel 1.0 mm.

Auch die Radiusschneide 25 und die Nebenschneide 24 weisen hinter der eigentlichen Schneidkante jeweils eine Radius-Freifläche 26 bzw. eine Neben-Freifläche 27 auf, wobei die Freifläche 22, die Radius-Freifläche 26 und die Neben-Freifläche 27 durchgängig und stufenlos in einander übergehen.

Der Schaftfräser 10 weist eine Freiflächenfase 30 auf, welche längs der Hauptschneide 21, der Radiusschneide 25 und der Nebenschneide 24 ausgebildet ist. Die Freiflächenfase reicht bis an die Schneiden heran und erstreckt sich im Wesentlichen längs der gesamten Schneide, gebildet aus der Hauptschneide 21, der Radiusschneide 25 und der Nebenschneide 24. Die Freiflächenfase 30 geht an einer Kante 32 in die Freifläche 22 bzw. die Radius-Freifläche 26 bzw. die Neben-Freifläche 27 über. Die Kante 32 ist scharf und weist eine geringe Schartigkeit auf, und bietet somit wenig Angriffspunkte für ein Ausbrechen bzw. Abbröckeln der Freiflächenfase 30 an der von den Schneiden abgewandten Begrenzung, d. h. am Übergang zur jeweiligen Freifläche. Für die Oberflächengüte der Freiflächenfase 30 gilt im gesamten Freiflächenfasenbereich Ra $\leq$ 0.1 $\mu$m.

Gemessen in einer lokalen Bezugsebene, welche senkrecht steht auf einer lokalen Tangente der Schneide, weist die Freiflächenfase 30 über ihre gesamte Länge jeweils nominal eine Breite von 80 $\mu$m auf. Die Freiflächenfase

30 ist daher in der Darstellung der Figur 1a unverhältnismässig gross dargestellt, um die Anordnung der Freiflächenfase 30 an der Schneide zu verdeutlichen. Die Freiflächenfase wurde durch konventionelles Schleifen hergestellt. Aufgrund der unvermeidlichen Herstellungstoleranzen schwankt die Breite der Freiflächenfase, die maximalen Abweichungen betragen im Bereich der Hauptschneide 20 μm, im Bereich des Radius 50 μm und im Bereich der Nebenschneide 30 μm. Die Abweichung der Gesamtfläche der Freiflächenfase 30 von einem vorgegebenen Wert, welcher sich aus dem Produkt der Freifasenlänge und der vorgegebenen Breite ergibt, beträgt aber weniger als 2 %, wie Messungen ergeben haben. Die Freiflächenfase 30 mit einem Freiwinkel im Bereich (0°, 1°) ist derart ausgebildet, dass sie sich durchgängig und stufenlos hinter den einzelnen Schneiden erstreckt. Weder der Wert des Freiwinkels noch der Fasenbreite weist entlang der Schneide betrachtet Sprünge auf.

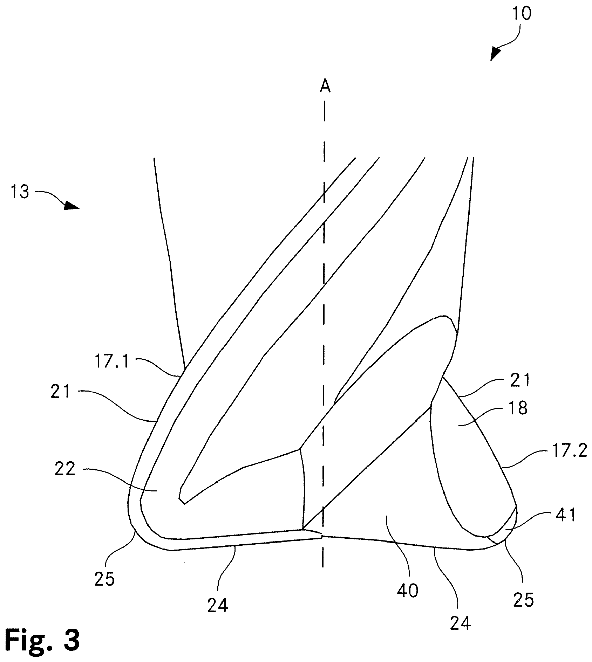

Die Figur 3 zeigt eine Seitenansicht des distalen Endes des Arbeitsbereichs 13 des Schaftfräsers 10, auf welcher die Abstützfläche für den Radiusbereich gut sichtbar ist. In der Figur gut sichtbar sind die distalen Abschnitte der beiden Schneidzähne 17.1, 17.2, welche von der Hauptschneide 21 über die Radiusschneide 25 in die Nebenschneide 24 übergehen. Die in der Figur 3 dargestellte Ansicht zeigt den Schneidzahn 17.1 auf der Seite seiner Freifläche 22, während vom anderen Schneidzahn 17.2 die Seite seiner Spannut 18 sichtbar ist. Die eigentliche, wannenförmige Spannut 18 mündet in die Stirnseite des Schaftfräsers 10. Radial nach innen schliesst sich eine ebene Fläche, die sog. Zahnanschnittfläche 40, an, welche sich entlang des distalen Endes des Schaftfräsers 10 bis zur Längsachse A erstreckt.

Bei der Herstellung des Schaftfräsers 10 wurde nun nach dem Schleifen der Zahnanschnittfläche 40 eine weitere ebene Fläche, nämlich die Abstützfläche 41 eingeschliffen. Diese erstreckt sich von einem radial äusseren Bereich der Zahnanschnittfläche 40 im Radiusbereich der Schneide bis in den Mantel des Schaftfräsers 10. Sie ist relativ zur Zahnanschnittfläche leicht abgewinkelt, wobei der entsprechende Winkel so gewählt ist, dass die Abstützfläche 41 eine im Wesentlichen dreieckige Form erhält und im Bereich des Mantels in einer Spitze ausläuft. Die Abstützfläche stützt den im Rahmen des Einsatzes des Schaftfräsers 10 besonders beanspruchten Radiusbereich und führt gemeinsam mit der Stützfase zu einem vorteilhaften Arbeitsverhalten und einer vorteilhaften Standzeit.

**Beispiele**

Eine Reihe von erfindungsgemässen Schaftfräsern mit unterschiedlichem Durchmesser d1, unterschiedlicher Schneidenlänge l2 und unterschiedlichem Radius r wurden hergestellt. Die Zähnezahl betrug jeweils 2, der Drallwinkel 40.5°. Die Freiflächenfase wurde jeweils durch konventionelles Schleifen erzeugt. Wie aus der folgenden Tabelle ersichtlich ist, kann dadurch bei vorgegebener Stützfasenbreite $b_{nom}$ die entsprechend resultierende gesamte Stützfasenfläche $A_{eff}$ mit kleiner Toleranz erhalten werden:

| **d1** [mm] | **l2** [mm] | **r** [mm] | **b**$_{nom}$ [μm] | **A**$_{nom}$ [mm$^2$] | **A**$_{eff}$ [mm$^2$] |
|---|---|---|---|---|---|
| 6.0 | 7.0 | 1.0 | 50 | 0.575 | 0.571 |
| 10.0 | 11.0 | 1.0 | 80 | 1.508 | 1.498 |
| 12.0 | 13.0 | 1.0 | 100 | 2.254 | 2.240 |
| 16.0 | 18.0 | 1.0 | 100 | 3.125 | 3.112 |
| 10.0 | 11.0 | 2.5 | 80 | 1.418 | 1.392 |

Versuche mit diesen Werkzeugen haben gezeigt, dass sie allesamt ein gutes Arbeitsverhalten mit geringen Vibrationen haben und ein gutes Arbeitsergebnis bei der Bearbeitung von Aluminium-Integralbauteilen liefern. Analog haben auch weitere Versuche mit Werkzeugen der Zähnezahl 3 ähnlich positive Ergebnisse gezeigt.

Die Erfindung ist nicht auf das In den Figuren 1 - 3 dargestellte Ausführungsbeispiel beschränkt. Insbesondere die Anzahl und Geometrie der Schneiden sowie die Dimensionen und Grössenverhältnisse der einzelnen Abschnitte des Werkzeugs können sich vom gezeigten Ausführungsbeispiel unterscheiden.

In einer Variante weist der Schaftfräser beispielsweise drei Schneiden auf. Diese treffen sich im Zentrum, d. h. auf der Längsachse des Werkzeugs. Es hat sich gezeigt, dass im Gegensatz zu einer früheren Lehrmeinung, wonach zur Bearbeitung von Aluminium-Integralbauteilen eine durchgehende Nebenschneide benötigt wird, ein erfindungsgemässer Fräser mit dieser Geometrie gut für diese Anwendung geeignet ist. Die entsprechende Zentrumsgestaltung führt zu einer zusätzlichen Stabilisierung des Werkzeugs. Der dreischneidige Fräser zeichnet sich gegenüber dem oben beschriebenen zweischneidigen Fräser insbesondere durch einen vergleichsweise grossen KernDurchmesser und eine vergleichsweise massive Stirnregion aus. Entsprechend ergibt sich eine höhere mechanische Stabilität, welche gerade bei grossen Auskragungen hinsichtlich Arbeitsverhalten und Standzeit von Vorteil ist. Das entsprechende Werkzeug ist zudem gut zum Eintauchen unter variablem Winkel (von bis mindestens 20°) geeignet. Die Eintauchtiefe beträgt mindestens den halben Werkzeugdurchmesser.

Zusammenfassend ist festzustellen, dass durch die Erfindung ein Vollfräswerkzeug geschaffen wird, welches sich durch geringe Vibrationen und eine hohe Standzeit auszeichnet und insbesondere zur Bearbeitung von Aluminium-Integralbauteilen geeignet ist.

**Patentansprüche**

1. Vollfräswerkzeug zur rotierenden Materialbearbeitung mit einem länglichen Werkzeugschaft (11), welcher einen Arbeitsbereich (13) aufweist, in welchem Schneiden (17.1, 17.2) mit zugehörigen Spanflächen (20) und bezüglich einer Drehrichtung hinter den Schneiden (17.1, 17.2) angeordnete Freiflächen (22) vorhanden sind, wobei jede der Schneiden (17.1, 17.2) einen mantelseitigen Hauptschneidenbereich (21) und einen stirnseitigen Nebenschneidenbereich (24) umfasst, wobei an wenigstens einer Schneide (17.1, 17.2) im Hauptschneidenbereich (21) auf der zugehörigen Freifläche (22) eine Freiflächenfase (30) ausgebildet ist, **dadurch gekennzeichnet, dass** jede der Schneiden (17.1, 17.2) einen den Hauptschneidenbereich (21) mit dem Nebenschneidenbereich (24) verbindenden Radiusbereich (25) umfasst und sich die Freiflächenfase (30) über die Freifläche (26) des Radiusbereichs (25) in die Freifläche (27) des Nebenschneidenbereichs (24) fortsetzt, wobei in einem Freiflächenfasenbereich, der sich vom Hauptschneidenbereich (21) über den Radiusbereich (25) bis in den Nebenschneidenbereich (24) erstreckt, sowohl ein Freiwinkel der Freiflächenfase (30) als auch eine Breite der Freiflächenfase (30) jeweils gemessen in einer lokalen Bezugsebene, welche senkrecht steht auf einer lokalen Tangente der Schneide (17.1, 17.2), einen stufenlosen Verlauf aufweisen und wobei für die Breite b der Freiflächenfase (30) im gesamten Freiflächenfasenbereich die Beziehung

$$0.005 \, d1 < b < 0.020 \, d1$$

gilt, wobei d1 den Werkzeugdurchmesser des Vollfräswerkzeugs bezeichnet und wobei eine maximale Breite b der Freiflächenfase (30) unabhängig vom Werkzeugdurchmesser den Wert von 200 $\mu$m nicht übersteigt.

2. Vollfräswerkzeug nach Anspruch 1, **dadurch gekennzeichnet, dass** die Breite b im Freiflächenfasenbereich bei einem Werkzeugdurchmesser d1 um nicht mehr als die Variation $\Delta b$ von einem vorgegebenen Wert abweicht, wobei

$$\Delta b = 40 \, \mu m, \text{ falls } d1 \leq 6 \text{ mm,}$$

$$\Delta b = 60 \, \mu m, \text{ falls } 6 \text{ mm} < d1 < 12 \text{ mm,}$$

und

$$\Delta b = 80 \, \mu m, \text{ falls } d1 \geq 12 \text{ mm.}$$

3. Vollfräswerkzeug nach Anspruch 1 oder 2, **dadurch gekennzeichnet, dass** die Breite b in einem Hauptschneidensektor und einem Nebenschneidensektor des Freiflächenfasenbereichs bei einem Werkzeugdurchmesser d1 um nicht mehr als die Variation $\Delta b'$ von einem vorgegebenen Wert abweicht, wobei

$$\Delta b' = 15 \, \mu m, \text{ falls } d1 \leq 6 \text{ mm,}$$

$$\Delta b' = 30 \, \mu m, \text{ falls } 6 \text{ mm} < d1 < 12 \text{ mm,}$$

und

$$\Delta b' = 40 \, \mu m, \text{ falls } d1 \geq 12 \text{ mm,}$$

und wobei eine Gesamtfläche der Freiflächenfase (30) bei einem Radius r des Radiusbereichs um nicht mehr als einen Wert ∆A von einer Gesamtfläche einer Freiflächenfase mit einer konstanten Breite des vorgegebenen Werts abweicht, wobei

$$\Delta A = 0.003\ d1 \cdot r,$$

bevorzugt

$$\Delta A = 0.0025\ d1 \cdot r,$$

wobei der Freiflächenfasenbereich aus dem Hauptschneidensektor, einem ersten Übergangssektor, dem Radiussektor, einem zweiten Übergangssektor und dem Nebenschneidensektor zusammengesetzt ist, welche jeweils unmittelbar aufeinander folgen,

wobei sich der erste Übergangssektor über einen Bereich der Schneide (17.1, 17.2) erstreckt, welcher vor und nach einem ersten Punkt der Schneide, in welchem diese ausgehend vom Hauptschneidenbereich (21) einen Mantel radial nach innen verlässt, eine Länge aufweist, die einer Winkeländerung von 20° der lokalen Tangente im Radiusbereich, angrenzend an den ersten Punkt entspricht, und

wobei sich der zweite Übergangssektor über einen Bereich der Schneide (17.1, 17.2) erstreckt, welcher vor und nach einem zweiten Punkt der Schneide (17.1, 17.2), in welchem deren lokale Tangente ausgehend vom Hauptschneidenbereich (21) erstmals einen rechten Winkel zu einer Werkzeugachse bildet, eine Länge aufweist, die einer Winkeländerung von 20° der lokalen Tangente im Radiusbereich, angrenzend an den zweiten Punkt entspricht.

4. Vollfräswerkzeug nach einem der Ansprüche 1 bis 3, **dadurch gekennzeichnet, dass** der Freiwinkel der Freiflächenfase (30) im gesamten Freiflächenfasenbereich im Bereich von 0.0 bis 3.0° liegt.

5. Vollfräswerkzeug nach Anspruch 4, **dadurch gekennzeichnet, dass** der Freiwinkel der Freiflächenfase (30) im gesamten Freiflächenfasenbereich im Bereich von 0.0 bis 1.5° liegt.

6. Vollfräswerkzeug nach einem der Ansprüche 1 bis 5, **dadurch gekennzeichnet, dass** ein Freiwinkel eines an die Freiflächenfase (30) angrenzenden Bereichs der Freifläche (22) im gesamten Freiflächenfasenbereich grösser ist als der Freiwinkel der Freiflächenfase (30), insbesondere der Freiwinkel des angrenzenden Bereichs im Bereich von 6 bis 20° liegt.

7. Vollfräswerkzeug nach Anspruch 6, **dadurch gekennzeichnet, dass** der Freiwinkel des angrenzenden Bereichs im gesamten Freiflächenfasenbereich um nicht mehr als 4° variiert.

8. Vollfräswerkzeug nach einem der Ansprüche 1 bis 7, **dadurch gekennzeichnet, dass** die Freiflächenfase (30) im gesamten Freiflächenfasenbereich in genau einer zur wenigstens einen Schneide (17.1, 17.2) weitgehend parallelen Kante in einen angrenzenden Bereich der zugehörigen Freifläche (22) übergeht.

9. Vollfräswerkzeug nach einem der Ansprüche 1 bis 8, **dadurch gekennzeichnet, dass** ein Kerndurchmesser bei einem Werkzeugdurchmesser d1 mindestens 0.55 d1 beträgt.

10. Vollfräswerkzeug nach einem der Ansprüche 1 bis 9, **gekennzeichnet durch** eine Abstützfläche (41), welche im Radiusbereich spannutenseitig an die Schneidkante (17.1, 17.2) angrenzt und von einer radial nach innen angrenzenden Zahnanschnittfläche (40) abgewinkelt ist.

11. Verfahren zur Herstellung eines Vollfräswerkzeugs nach einem der Ansprüche 1 bis 10, bei welchem in einem Arbeitsbereich Schneiden (17.1, 17.2) mit zugehörigen Spanflächen (20) und bezüglich einer Drehrichtung hinter den Schneiden (17.1, 17.2) angeordnete Freiflächen (22) erzeugt werden, wobei jede der Schneiden (17.1, 17.2) einen mantelseitigen Hauptschneidenbereich (21) und einen stirnseitigen Nebenschneidenbereich (24) umfasst, wobei an wenigstens einer Schneide (17.1, 17.2) im Hauptschneidenbereich (21) auf der zugehörigen Freifläche (22) eine Freiflächenfase (30) ausgebildet wird, **dadurch gekennzeichnet, dass** jede der Schneiden (17.1, 17.2) einen den Hauptschneidenbereich (21) mit dem Nebenschneidenbereich (24) verbindenden Radiusbereich (25) umfasst, die Freiflächenfase (30) derart erzeugt wird, dass sie sich über die Freifläche (26) des Radiusbereichs (25) in die Freifläche (27) des Nebenschneidenbereichs (24) fortsetzt, wobei in einem Freiflächenfasenbereich, der sich vom Hauptschneidenbereich (21) über den Radiusbereich (25) bis in den Nebenschneidenbereich (24) erstreckt, sowohl ein Freiwinkel der Freiflächenfase (30) als auch eine Breite der Freiflächenfase (30) jeweils gemessen in einer lokalen Bezugsebene, welche senkrecht steht auf einer lokalen Tangente der Schneide (17.1, 17.2), einen stufenlosen Verlauf aufweisen und wobei für die Breite b der Freiflächenfase (30) im gesamten Freiflächenfasenbereich die Beziehung

$$0.005\,d1 < b < 0.020\,d1$$

gilt, wobei d1 den Werkzeugdurchmesser des Vollfräswerkzeugs bezeichnet und wobei eine maximale Breite b der Freiflächenfase (30) unabhängig vom Werkzeugdurchmesser den Wert von 200 $\mu$m nicht übersteigt.

12. Verfahren nach Anspruch 11, **dadurch gekennzeichnet, dass** die Freiflächenfase (30) durch konventionelles Schleifen erzeugt wird.


## Claims

1. Solid milling tool for rotary material machining, comprising an elongate tool shank (11) which has a working region (13) in which cutters (17.1, 17.2) having associated rake faces (20) and flanks (22) arranged behind the cutters (17.1, 17.2) with respect to a direction of rotation are present, wherein each of the cutters (17.1, 17.2) comprises a lateral-side main cutter region (21) and an end-side secondary cutter region (24), wherein a flank bevel (30) is formed on the associated flank (22) on at least one cutter (17.1, 17.2) in the main cutter region (21), **characterized in that** each of the cutters (17.1, 17.2) comprises a radius region (25) connecting the main cutter region (21) to the secondary cutter region (24) and the flank bevel (30) continues beyond the flank (26) of the radius region (25) into the flank (27) of the secondary cutter region (24), wherein, in a flank bevel region which extends from the main cutter region (21) over the radius region (25) into the secondary cutter region (24), both a clearance angle of the flank bevel (30) and a width of the flank bevel (30), each measured in a local reference plane which is perpendicular to a local tangent of the cutter (17.1, 17.2), have a stepless profile, and wherein the following relationship holds for the width b of the flank bevel (30) in the total flank bevel region:

$$0.005\ d1 < b < 0.020\ d1,$$

where d1 designates the tool diameter of the solid milling tool and where a maximum width b of the flank bevel (30) does not exceed the value of 200 $\mu$m independently of the tool diameter.

2. Solid milling tool according to Claim 1, **characterized in that** the width b in the flank bevel region at a tool diameter d1 deviates by not more than the variation $\Delta b$ from a predetermined value, where

$$\Delta b = 40\ \mu m,\ \text{if}\ d1 \leq 6\ mm,$$

$$\Delta b = 60\ \mu m,\ \text{if}\ 6\ mm < d1 < 12\ mm,$$

and

$$\Delta b = 80\ \mu m,\ \text{if}\ d1 \geq 12\ mm.$$

3. Solid milling tool according to Claim 1 or 2, **characterized in that** the width b in a main cutter sector and a secondary cutter sector of the flank bevel region at a tool diameter d1 deviates by not more than the variation $\Delta b'$ from a predetermined value, where

$$\Delta b' = 15 \ \mu m, \ if \ d1 \leq 6 \ mm,$$

$$\Delta b' = 30 \ \mu m, \ if \ 6 \ mm < d1 < 12 \ mm,$$

and

$$\Delta b' = 40 \ \mu m, \ if \ d1 \geq 12 \ mm,$$

and wherein a total area of the flank bevel (30) at a radius r of the radius region deviates by not more than a value ∆A from a total area of a flank bevel with a constant width of the predetermined value, where

$$\Delta A = 0.003 \ d1 \cdot r,$$

preferably

$$\Delta A = 0.0025 \ d1 \cdot r,$$

wherein the flank bevel region is composed of the main cutter sector, a first transition sector, the radius sector, a second transition sector and the secondary cutter sector, which each directly follow one another, wherein the first transition sector extends over a region of the cutter (17.1, 17.2) which, before and after a first point of the cutter in which said cutter leaves a lateral surface radially inwardly starting from the main cutter region (21), has a length which corresponds to a change of angle of 20° of the local tangent in the radius region, adjoining the first point, and wherein the second transition sector extends over a region of the cutter (17.1, 17.2) which, before and after a second point of the cutter (17.1, 17.2) in which the local tangent thereof, starting from the main cutter region (21), forms for the first time a right angle to a tool axis, has a length which corresponds to a change of angle of 20° of the local tangent in the radius region, adjoining the second point.

4. Solid milling tool according to one of Claims 1 to 3, **characterized in that** the clearance angle of the flank bevel (30) in the total flank bevel region lies in the range from 0.0 to 3.0°.

5. Solid milling tool according to Claim 4, **characterized in that** the clearance angle of the flank bevel (30) in the total flank bevel region lies in the range from 0.0 to 1.5°.

6. Solid milling tool according to one of Claims 1 to 5, **characterized in that** a clearance angle of a region, adjoining the flank bevel (30), of the flank (22) in the total flank bevel region is greater than the clearance angle of the flank bevel (30), and in particular the clearance angle of the adjoining region lies in the range from 6 to 20°.

7. Solid milling tool according to Claim 6, **characterized in that** the clearance angle of the adjoining region in the total flank bevel region varies by not more than 4°.

8. Solid milling tool according to one of Claims 1 to 7, **characterized in that** the flank bevel (30) in the total flank bevel region merges, in precisely one edge substantially parallel to the at least one cutter (17.1, 17.2), into an adjoining region of the associated flank (22).

9. Solid milling tool according to one of Claims 1 to 8, **characterized in that** a core diameter at a tool diameter d1 is at least 0.55 d1.

10. Solid milling tool according to one of Claims 1 to 9, **characterized by** a supporting face (41) which adjoins the cutting edge (17.1, 17.2) on the flute side in the radius region and is angled off from a radially inwardly adjoining tooth cut face (40).

11. Method for producing a solid milling tool according to one of Claims 1 to 10, in which cutters (17.1, 17.2) having associated rake faces (20) and flanks (22) arranged behind the cutters (17.1, 17.2) with respect to a direction of rotation are produced in a working region, wherein each of the cutters (17.1, 17.2) comprises a lateral-side main cutter region (21) and an end-side secondary cutter region (24), wherein a flank bevel (30) is formed on the associated flank (22) on at least one cutter (17.1, 17.2) in the main cutter region (21), **characterized in that** each of the cutters (17.1, 17.2) comprises a radius region (25) connecting the main cutter region (21) to the secondary cutter region (24), the flank bevel (30) is produced in such a way that it continues beyond the flank (26) of the radius region (25) into the flank (27) of the secondary cutter region (24), wherein, in a flank bevel region which extends from the main cutter region (21) over the radius region (25) into the secondary cutter region (24), both a clearance angle of the flank bevel (30) and a width of the flank bevel (30), each measured in a local reference plane which is perpendicular to a local tangent of the cutter (17.1, 17.2), have a stepless profile, and wherein the following relationship holds for the width b of the flank bevel (30) in the total flank bevel region:

$$0.005 \ d1 < b < 0.020 \ d1,$$

where d1 designates the tool diameter of the solid milling tool and where a maximum width b of the flank bevel (30) does not exceed the value of 200 $\mu$m independently of the tool diameter.

12. Method according to Claim 11, **characterized in that** the flank bevel (30) is produced by conventional grinding.

**Revendications**

1. Outil de fraisage plein pour l'usinage rotatif de matériaux avec une tige d'outil allongée (11), qui présente une zone de travail, dans laquelle se trouvent des tranchants (17.1, 17.2) avec des faces de coupe correspondantes (20) et des faces de dépouille (22) disposées derrière les tranchants (17.1, 17.2) par rapport à un sens de rotation, dans lequel chacun des tranchants (17.1, 17.2) comprend une zone de tranchant principale en face latérale (21) et une zone de tranchant secondaire en face frontale (24), dans lequel un chanfrein de face de dépouille (30) est formé sur au moins un tranchant (17.1, 17.2) dans la zone de tranchant principale (21) sur la face de dépouille correspondante (22), **caractérisé en ce que** chacun des tranchants (17.1, 17.2) comprend une zone arrondie (25) reliant la zone de tranchant principale (21) à la zone de tranchant secondaire (24) et le chanfrein de face de dépouille (30) se prolonge par la face de dépouille (26) de la zone arrondie (25) dans la face de dépouille (27) de la zone de tranchant secondaire (24), dans lequel, dans une zone de chanfrein de face de dépouille qui s'étend de la zone de tranchant principale (21) par la zone arrondie (25) jusque dans la zone de tranchant secondaire (24), aussi bien un angle de dépouille du chanfrein de face de dépouille (30) qu'une largeur du chanfrein de face de dépouille (30), respectivement mesurés dans un plan de référence local, qui est perpendiculaire à une tangente locale du tranchant (17.1, 17.2), présentent une allure continue et dans lequel on a pour la largeur b du chanfrein de face de dépouille (30) dans toute la zone du chanfrein de face de dépouille la relation 0,005 d1 < b < 0,020 d1, dans laquelle d1 désigne le diamètre d'outil de l'outil de fraisage plein et dans lequel une largeur maximale b du chanfrein de face de dépouille (30) ne dépasse pas la valeur de 200 $\mu$m, indépendamment du diamètre de l'outil.

2. Outil de fraisage plein selon la revendication 1, **caractérisé en ce que** la largeur b dans la zone du chanfrein de face de dépouille pour un diamètre d'outil d1 ne s'écarte pas de plus de la variation $\Delta b$ d'une valeur prédéterminée, dans lequel

$$\Delta b = 40 \ \mu m, \ \text{dans le cas où d1} \leq 6 \ mm,$$

$$\Delta b = 60 \ \mu m, \ \text{dans le cas où 6 mm} < d1 < 12 \ mm,$$

et

$$\Delta b = 80 \ \mu m, \ \text{dans le cas où d1} \geq 12 \ mm.$$

3. Outil de fraisage plein selon la revendication 1 ou 2, **caractérisé en ce que** la largeur b dans un secteur de tranchant principal et un secteur de tranchant secondaire de la zone de chanfrein de face de dépouille pour un diamètre d'outil d1 ne s'écarte pas de plus de la variation $\Delta b'$ d'une valeur prédéterminée, dans lequel

$$\Delta b' = 15 \text{ µm, dans le cas où d1} \leq 6 \text{ mm,}$$

$$\Delta b' = 30 \text{ µm, dans le cas où 6 mm} < d1 < 12 \text{ mm,}$$

et

$$\Delta b' = 40 \text{ µm, dans le cas où d1} \geq 12 \text{ mm,}$$

et dans lequel une surface totale du chanfrein de face de dépouille (30) pour un rayon r de la zone arrondie ne s'écarte par de plus d'une valeur $\Delta A$ d'une surface totale d'un chanfrein de face de dépouille avec une largeur constante de la valeur prédéterminée, dans lequel

$$\Delta A = 0,003 \text{ d1} \cdot r,$$

de préférence

$$\Delta A = 0,0025 \cdot r,$$

dans lequel la zone du chanfrein de face de dépouille est composée du secteur de tranchant principal, d'un premier secteur de transition, du secteur arrondi, d'un second secteur de transition et du secteur de tranchant secondaire, qui se suivent chacun directement,
dans lequel le premier secteur de transition s'étend sur une zone du tranchant (17.1, 17.2) qui présente, avant et après un premier point du tranchant, auquel celui-ci quitte radialement vers l'intérieur une face latérale en partant de la zone de tranchant principale (21), une longueur qui correspond à un changement d'angle de 20° de la tangente locale dans la zone arrondie, à proximité du premier point, et
dans lequel le second secteur de transition s'étend sur une zone du tranchant (17.1, 17.2) qui présente, avant et après un second point du tranchant (17.1, 17.2), auquel sa tangente locale forme à partir de la zone de tranchant principale (21) pour la première fois un angle droit avec un axe de l'outil, une longueur qui correspond à un changement d'angle de 20° de la tangente locale dans la zone arrondie, à proximité du second point.

4. Outil de fraisage plein selon l'une quelconque des revendications 1 à 3, **caractérisé en ce que** l'angle de dépouille du chanfrein de face de dépouille (30) se situe dans toute la zone du chanfrein de face de dépouille dans la plage de 0,0 à 3,0°.

5. Outil de fraisage plein selon la revendication 4, **caractérisé en ce que** l'angle de dépouille du chanfrein de face de dépouille (30) se situe dans toute la zone du chanfrein de face de dépouille dans la plage de 0,0 à 1,5°.

6. Outil de fraisage plein selon l'une quelconque des revendications 1 à 5, **caractérisé en ce qu'**un angle de dépouille d'une zone de la face de dépouille (22) adjacente au chanfrein de face de dépouille (30) est plus grand dans toute la zone du chanfrein de face de dépouille que l'angle de dépouille du chanfrein de face de dépouille (30), en particulier l'angle de dépouille de la zone adjacente se situe dans la plage de 6 à 20°.

7. Outil de fraisage plein selon la revendication 6, **caractérisé en ce que** l'angle de dépouille de la zone adjacente ne varie pas de plus de 4° dans toute la zone du chanfrein de face de dépouille.

8. Outil de fraisage plein selon l'une quelconque des revendications 1 à 7, **caractérisé en ce que** le chanfrein de face de dépouille (30) dans toute la zone du chanfrein de face de dépouille se prolonge en exactement une arête largement parallèle à au moins un tranchant (17.1, 17.2) dans une zone adjacente de la face de dépouille correspondante (22).

**9.** Outil de fraisage plein selon l'une quelconque des revendications 1 à 8, **caractérisé en ce qu'**un diamètre de noyau vaut au moins 0,55 d1 pour un diamètre d'outil d1.

**10.** Outil de fraisage plein selon l'une quelconque des revendications 1 à 9, **caractérisé par** une face d'appui (41), qui est adjacente dans la zone arrondie du côté de la rainure à copeaux à l'arête de coupe (17.1, 17.2) et qui est coudée à partir d'une face de découpe de dent (40) adjacente radialement vers l'intérieur.

**11.** Procédé de fabrication d'un outil de fraisage plein selon l'une quelconque des revendications 1 à 10, dans lequel on produit dans une zone de travail des tranchants (17.1, 17.2) avec des faces de coupe correspondantes (20) et des faces de dépouille (22) disposées derrière les tranchants (17.1, 17.2) par rapport à un sens de rotation, dans lequel chacun des tranchants (17.1, 17.2) comprend une zone de tranchant principale en face latérale (21) et une zone de tranchant secondaire en face frontale (24), dans lequel on forme un chanfrein de face de dépouille (30) sur au moins un tranchant (17.1, 17.2) dans la zone de tranchant principale (21) sur la face de dépouille correspondante (22), **caractérisé en ce que** chacun des tranchants (17.1, 17.2) comprend une zone arrondie (25) reliant la zone de tranchant principale (21) à la zone de tranchant secondaire (24), on produit le chanfrein de face de dépouille (30) de telle manière qu'il se prolonge par la face de dépouille (26) de la zone arrondie (25) dans la face de dépouille (27) de la zone de tranchant secondaire (24), dans lequel, dans une zone du chanfrein de face de dépouille qui s'étend de la zone de tranchant principale (21) par la zone arrondie (25) jusque dans la zone de tranchant secondaire (24), aussi bien un angle de dépouille du chanfrein de face de dépouille (30) qu'une largeur du chanfrein de face de dépouille (30), respectivement mesurés dans un plan de référence local, qui est perpendiculaire à une tangente locale du tranchant (17.1, 17.2), présentent une allure continue et dans lequel on a pour la largeur b du chanfrein de face de dépouille (30) dans toute la zone du chanfrein de face de dépouille la relation

$$0{,}005 \; d1 < b < 0{,}020 \; d1,$$

dans laquelle d1 désigne le diamètre d'outil de l'outil de fraisage plein et dans lequel une largeur maximale b du chanfrein de face de dépouille (30) ne dépasse pas la valeur de 200 μm, indépendamment du diamètre de l'outil.

**12.** Procédé selon la revendication 11, **caractérisé en ce que** l'on produit le chanfrein de face de dépouille (30) par meulage conventionnel.

Fig. 1a

Fig. 1b

**Fig. 2a**

**Fig. 2b**

**Fig. 2c**

**Fig. 2d**

**Fig. 2e**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080199265 A1
- EP 2082822 A1
- WO 2006046278 A1
- EP 2093003 A1